(19)

Europäisches Patentamt

European Patent Office

Office européen des brevets

(11) **EP 4 614 358 A1**

(12) **EUROPEAN PATENT APPLICATION**

(43) Date of publication:
**10.09.2025 Bulletin 2025/37**

(21) Application number: **24382241.8**

(22) Date of filing: **05.03.2024**

(51) International Patent Classification (IPC):
**G06F 17/16** $^{(2006.01)}$   **G06F 30/00** $^{(2020.01)}$

(52) Cooperative Patent Classification (CPC):
**G06F 17/16; G06F 30/20; G06F 30/25; G06F 30/28;**
G06F 2113/08; G06F 2119/08

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **Universidad Carlos III de Madrid**
**28919 Leganés - Madrid (ES)**
• **von Karman Institute for Fluid Dynamics**
**1640 Sint-Genesius-Rode (BE)**

(72) Inventors:
• **Méndez, Miguel Alfonso**
**B-1640 Sint-Genesius-Rode (BE)**
• **Stefano, Discetti**
**28911 Leganés - Madrid (ES)**
• **Ianiro, Andrea**
**28911 Leganés - Madrid (ES)**
• **Tirelli, Iacopo**
**28911 Leganés - Madrid (ES)**

(74) Representative: **Clarke, Modet y Cía., S.L.**
**C/ Suero de Quiñones 34-36**
**28002 Madrid (ES)**

(54) **SYSTEM AND METHOD FOR OBTAINING SPATIAL AND TEMPORAL PATTERNS OF THE VELOCITY OR A THERMODYNAMIC PROPERTY OF A FLUID FROM SCATTERED MEASUREMENTS**

(57)     System and method for obtaining spatial and temporal patterns of the velocity or a thermodynamic property of a fluid from scattered measurements. The system comprises at least one sensor (8,16) that acquires scattered measurements (9) of a velocity or thermodynamic property of a fluid (1) at scattered positions x, and time instants $t_i$; and a processing unit (10) that determines an analytical approximation field $\tilde{u}\,(x,\,t_i)$ of the velocity or thermodynamic property of the fluid (1) as a linear combination of a set of radial basis functions whose collocation points are set in the scattered positions x; computes a temporal correlation matrix K defined as:

$$K_{ij} = \frac{1}{\|\Omega\|}\int_{\Omega} \tilde{u}\,(x,t_i)\,\tilde{u}\,(x,t_j)d\Omega\,,$$

wherein $\Omega$ is the spatial domain of the scattered measurements (9); decomposes the matrix K via SVD; and obtains the temporal $\psi_i$ and spatial $\phi_i$ modes of the proper orthogonal decomposition of the velocity or thermodynamic property of the fluid (1) using the eigenvectors and eigenvalues of the matrix K.

FIG.1A

EP 4 614 358 A1

**Description**

**FIELD**

The present invention is comprised within the field of metrology for fluid mechanics and particle-based measurements. In particular, the present invention refers to a system and method that extracts fluid flow patterns using scattered measurements in the fluid, such as data from scattered tracers in a two-dimensional or three-dimensional space. The present invention computes flow patterns from an ensemble of scattered measurements from point objects without the need to select a common grid for instantaneous realisations.

**BACKGROUND**

The investigation of turbulent phenomena has historically been challenging due to their chaotic behaviour. Turbulence's inherent complexity and unpredictability have garnered significant interest across scientific disciplines, including fluid dynamics, meteorology, engineering, and others. Understanding and characterizing turbulent flows are crucial endeavours, given the widespread occurrence of turbulence in both natural and engineered systems. One interesting aspect involves exploring whether the flow's description can be simplified by breaking it down into "coherent" structures that are observable and predictable through theoretical considerations ([1]). This decomposition approach can potentially reveal underlying patterns and behaviours within turbulent flows.

Dimensionality reduction represents a crucial branch of both machine learning and data engineering, focusing on the exploration of methods to encode high-dimensional data into a more compact, low-dimensional representation. In the context of fluid dynamics, the widespread adoption of dimensionality reduction can be traced back to the introduction of Proper Orthogonal Decomposition (POD) as a tool for identifying and characterizing coherent structures within turbulent flows ([2],[3]). The concept that seemingly chaotic dynamics could be represented as a linear combination of coherent structures has driven interest in the dynamical system perspective of turbulent flows. The fundamental objective of any decomposition is to describe the data as a linear combination of elementary components known as modes. Each mode has its own spatial structure and temporal evolution and is potentially capable of describing essential features of the data. The removal of irrelevant modes enables filtering and data compression, while the dominant modes offer a basis for constructing reduced models capable of significantly reducing the computational burdens in the simulations of large dynamical systems.

POD ([4]) is one of the most used techniques to extract the patterns of turbulent flows. Given a dataset $u(x, t)$ sampled in space $x$ and time $t$, the decomposition via POD is:

$$u(x,t) = \sum_{i=1}^{r} \varphi_i(x)\sigma_i\psi_i(t) \qquad (1)$$

where $\varphi_i(x)$ represents a set of spatial functions (or spatial modes), $\sigma_i$ the amplitudes and $\psi_i(t)$ a set of temporal functions (or temporal modes). According to Equation 1, the POD breaks down the original data as a linear combination of spatial functions ($\varphi_i(x)$) that occurs in time with a specific trend ($\psi_i(t)$) and intensity ($\sigma_i$). The spatial/temporal modes are the eigenvectors of the spatial/temporal correlation matrix, while the amplitudes are the square root of its eigenvalues. The application of POD to detect spatial and temporal coherent structures requires measurements on multiple points simultaneously.

In fluid-dynamics, flow field quantities can be measured with Particle Image Velocimetry (PIV) ([5]). This technique uses seeding particles as "flow samplers". The tracer particles can be for instance made from atomized liquids, droplets, bubbles, powders, and thermographic phosphors. The position of the tracer particles moving with the flow is observed with a camera, recording the light scattered by the tracer particles, which are illuminated with a light source. As it is disclosed in patent document WO2011076346-A1, if at least two images with known time separation are provided, the tracer particles can be used to determine the flow velocity in a plane or in a three-dimensional space, dividing the particle displacement by the temporal separation between the two images. Velocity fields are therefore evaluated measuring the particle displacements between at least two snapshots with known time separation. If the tracer particles are sensitive to thermodynamic quantities, they also sample the thermodynamic properties in scattered positions in space. PIV stands out for providing a spatial (and temporal, if sufficiently fast hardware is available) description of the organization of turbulent flows, thus providing useful information for diagnostics, as well as for validation of models and numerical simulations, among others. In classic PIV, the velocity vectors are obtained by splitting the domain into interrogation windows and computing cross-correlation among consecutive frames in each window.

In recent years, an alternative processing approach known as Particle Tracking Velocimetry (PTV) has witnessed a surge in popularity, particularly in 3D applications. This rise can be attributed to its distinct advantages over traditional cross-correlation techniques, enabling the capture of local velocity vectors without the spatial filtering effects typically associated with cross-correlation methods. The output of PTV is a scattered distribution that contains particle-by-particle information. Patent document WO2014191461-A1 discloses a method of determining a changing spatial distribution of particles at multiple points in time following each other at intervals.

Currently, the standard approach for handling both cross-correlation-based and PTV data in the context of POD involves the interpolation of data onto a structured grid. Both cross-correlation interrogation and interpolation of particle vectors/tracks from PTV introduce a spatial filtering error ([6]). Furthermore, the velocity fields are discretized in cells centered in the grid points. It is common practice to compute the spatial $\varphi_i(x)$ and temporal $\psi_i(t)$ modes of Equation 1 using a Singular Value Decomposition (SVD) of the data on a fixed grid, equal for all snapshots, and assuming the velocity field as a sum of step-like functions, with constant value on each cell. It must be noted that the filtering error in PTV arises from the interpolation process, while the error on the original vectors is substantially randomly distributed ([7]).

The proposed method delivers spatial and temporal patterns with reduction of the error due to interpolation and to discrete treatment used in state-of-art practice.

References

[1] Jiménez, J., 2018. Coherent structures in wall-bounded turbulence. Journal of Fluid Mechanics 842, P1.

[2] J.L. Lumley. Stochastic Tools in Turbulence. DOVER PUBN INC, 1970. ISBN 0486462706.

[3] J.L. Lumley and A.Poje. Low-dimensional models for flows with density fluctuations. Physics of Fluids, 9(7):2023-2031, jul 1997. doi: 10.1063/1.869321.

[4] Lumley, J.L., 1967. The structure of inhomogeneous turbulent flows. Atmospheric turbulence and radio wave propagation, 166-178.

[5] Raffel, M., Willert, C. E., Scarano, F., Kähler, C. J., Wereley, S. T., & Kompenhans, J. (2018). Particle image velocimetry: a practical guide. Springer.

[6] Scarano, F., 2003. Theory of non-isotropic spatial resolution in PIV. Experiments in Fluids 35, 268-277.

[7] Kähler, C.J., Scharnowski, S. and Cierpka, C., 2012. On the resolution limit of digital particle image velocimetry. Experiments in fluids, 52, pp.1629-1639.

[8] Abram, C., Fond, B. and Beyrau, F., 2018. Temperature measurement techniques for gas and liquid flows using thermographic phosphor tracer particles. Progress in energy and combustion science, 64, pp.93-156.

[9] Abe, S., Okamoto, K. and Madarame, H., 2004. The development of PIV-PSP hybrid system using pressure sensitive particles. Measurement Science and Technology, 15(6), p.1153.

[10] Ahmerkamp, S., Jalaluddin, F.M., Cui, Y., Brumley, D.R., Pacherres, C.O., Berg, J.S., Stocker, R., Kuypers, M.M., Koren, K. and Behrendt, L., 2022. Simultaneous visualization of flow fields and oxygen concentrations to unravel transport and metabolic processes in biological systems. Cell Reports Methods, 2(5).

[11] Someya, S., 2021. Particle-based temperature measurement coupled with velocity measurement. Measurement Science and Technology, 32(4), p.042001.

[12] B.R. Noack, P.Papas, P. Monkewitz. The need for a pressure-term representation in empirical Galerkin models of incompressible shear flows. Journal of Fluid Mechanics. 2005;523:339-365. doi:10.1017/S0022112004002149

[13] P. Saini, C.M. Arndt, and A.M. Steinberg. Development and evaluation of gappy-POD as a data reconstruction technique for noisy PIV measurements in gas turbine combustors. Experiments in Fluids, 57(7), jul 2016. doi: 10.1007/s00348-016-2208-7.

[14] J.A. Bourgeois, B.R. Noack, and R.J. Martinuzzi. Generalized phase average with applications to sensor-based flow estimation of the wall-mounted square cylinder wake. Journal of Fluid Mechanics, 736:316-350, nov 2013. doi: 10.1017/jfm.2013.494.

[15] J. Kriegseis, T. Dehler, M. Gnirß, and C. Tropea. Common-base proper orthogonal decomposition as a means of quantitative data comparison. Measurement Science and Technology, 21(8): 085403, jul 2010. doi: 10.1088/0957-0233/21/8/085403.

[16] Z. Yao, Z. Wang, J. Yi-Lin Forrest, Q. Wang, and J. Lv. Empirical mode decomposition-adaptive least squares method for dynamic calibration of pressure sensors. Measurement Science and Technology, 28(4):045010, feb 2017. doi: 10.1088/1361-6501/ aa5c25.

[17] Z. Shen, Z. Shi, G. Shen, D. Zhen, F. Gu, and A. Ball. Informative singular value decomposition and its application in fault detection of planetary gearbox. Measurement Science and Technology, 33(8):085010, May 2022. doi: 10.1088/1361-6501/ac69b0.

[18] A. Castillo and A. Roman Messina. Data-driven sensor placement for state reconstruction via POD analysis. IET Generation, Transmission & Distribution, 14(4):656-664, jan 2020. doi: 10.1049/iet-gtd.2019.0199.

## SUMMARY

The present invention refers to a system and method for obtaining spatial and temporal patterns of the velocity or a thermodynamic property of a fluid from scattered measurements.

The system comprises at least one sensor configured to acquire, for each time instant $t_i$ of a plurality $N_t$ of time instances, a plurality $N_c$ of scattered measurements of a velocity or a thermodynamic property of a fluid at scattered positions $x = \{x_{i1}, x_{i2}, \ldots, x_{iN_C}\}$.

The system also comprises a processing unit that receives as input the scattered measurements and provides as output spatial/temporal coherent patterns based on POD modes. The scattered measurements (e.g. velocity vectors) are reduced to produce an approximation of the analytical function of the field (velocity or thermodynamic property), analytical approximation field $\tilde{u}(x, t_i)$, using Radial Basis Functions (RBFs). RBFs belong to a specific class of mathematical functions with value depending on the distance from designated center points, referred to as collocation points, giving them the "radial" attribute. A weighted average of the radial basis functions approximates the object function $f(x)$, as illustrated in the following equation:

$$f(x) \approx \sum_{i=1}^{N_c} w_i \gamma_i(x | x_i^*, c_k) \qquad (2)$$

In the provided equation, $N_c$ is the number of collocation points located in $x_i^*$, $c_k$ is the shape parameter, $\gamma_i$ represents the radial basis functions, and $w_i$ denotes the weights that best fit this approximation. In the proposed method, the object function $f(x)$ is the quantity measured using the tracer particles (velocity for standard PIV, or thermodynamic quantities for particles sensitive to them [8, 9, 10, 11]).

Once the analytical approximation field $\tilde{u}(x, t_i)$ for each time instant is available, a temporal correlation matrix K is computed through an analytical approximation of the inner product between the velocity fields from Equation 2. The temporal modes $\psi_i(t)$ are the eigenvectors of $K$. The eigenvalues are $\sigma_i^2$. Spatial modes $\varphi_i(x)$, on the other hand, can be obtained through projections of the ensemble of snapshots on the temporal modes after selecting a grid. The outcome is an analytical representation of temporal modes and amplitudes that are now independent of the mesh used in the experiments.

The spatial and temporal patterns/modes can be considered per se a measured quantity in fluid dynamics. The widespread adoption of POD in both experimental and numerical fluid dynamics can be largely attributed to the development of efficient algorithms for its computation. With the continuous advancement of experimental fluid mechanics, especially PIV, the use of POD to extract coherent structures from experimental data has experienced significant growth over the last two decades.

The spatial and temporal modes can be directly used for, among others, the following applications in experimental fluid dynamics:

- Reduced order modeling of dynamical systems, based on Galerkin projection ([12]).

- Filling gaps in experimental data ([13]), the so-called Gappy POD.

- Constructing efficient regressors and interpolators.

- Building estimators of quasi-periodic flows ([14]).

- Validating numerical simulations ([15]).

- Enhancing adaptive least square problems ([16]).

- Fault diagnostics ([17]).

- Optimal sensor placement ([18]).

More broadly, the exploration of methods to decompose a flow into a linear combination of coherent patterns, referred to as modes, has evolved into a well-established domain of data processing, commonly known as data-driven modal analysis.

The project leading to this application has received funding from the European Research Council (ERC) under the European Union's Horizon 2020 research and innovation programme (grant agreement No 949085).

## BRIEF DESCRIPTION OF THE DRAWINGS

A series of drawings which aid in better understanding the invention and which are expressly related with an embodiment of said invention, presented as a non-limiting example thereof, are very briefly described below. The components in the drawings are not necessarily to scale, emphasis instead being placed upon clearly illustrating the principles of the presented invention.

Figure 1A illustrates an embodiment of the system applied to extract spatial and temporal patterns of the velocity in a fluid using particle-image measurements. Figure 1B depicts another embodiment of the system used to extract spatial and temporal patterns of a thermodynamic property of the air in the atmosphere using scattered measurements acquired by a set of drones.

Figure 2 represents a flowchart of the method of the present invention.

## DETAILED DESCRIPTION

The system and method of the present invention presents a new way to compute spatial and temporal patterns of the velocity or a thermodynamic property of a fluid using measurements scattered in space acquired by one or more sensors.

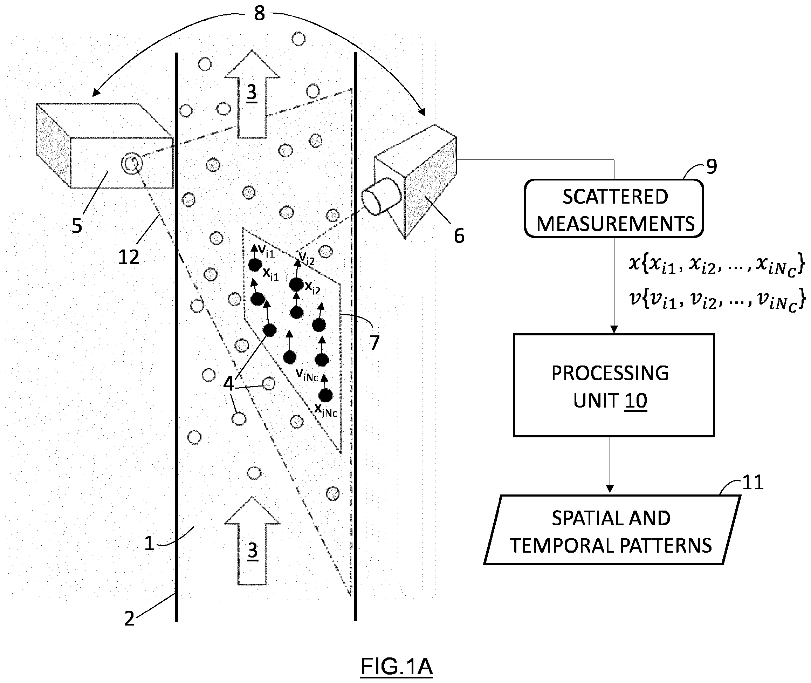

In an embodiment, the scattered measurements are based on particle images acquired by a particle image velocimetry system. Figure 1A schematically depicts a setup for particle-image measurements using a particle image velocimetry system. The setup includes a fluid 1 to be measured, which is seeded with tracer particles 4 and flows through a conduit 2 in a direction 3. The tracer particles 4 are illuminated by a light source 5 (e.g. a laser). The light scattered by the tracer particles 4 is collected by a camera 6 within a spatial domain $\Omega$ of measurement (field of view 7). For the sake of simplicity only one camera 6 is shown in Figure 1A, although the setup may include more cameras for three-dimensional measurement. The particle image velocimetry system 8 of Figure 1A includes the light source 5 and the camera 6, but may comprise additional elements, not shown in the figure, such as a synchronizer that controls the camera 6 and light source 5 activation.

The particle image velocimetry system acquires measurements of flow velocity at scattered positions and different time instants. Figure 1A shows, for a given time instant $t_i$, the flow velocity measurements $v = \{v_{i1}, v_{i2}, \dots, v_{iN_C}\}$ of the tracer particles 4 located at scattered positions $x = \{x_{i1}, x_{i2}, \dots, x_{iN_C}\}$ within the field of view 7, wherein the positions $x$ change over time as different tracer particles 4 pass through the field of view 7 of the camera 6. The number of tracer particles can change over different instantaneous realizations, i.e. $N_c$ is a function of the time.

The particle image velocimetry system sends the scattered measurements 9, acquired at each time instant $t_i$ of a plurality $N_t$ of time instances, to a processing unit 10 (e.g. a processor) in charge of obtaining the spatial and temporal patterns 11 of the velocity $v$ of the fluid 1, and in particular the temporal $\psi_i$ and spatial $\phi_i$ modes of the proper orthogonal decomposition of the velocity of the fluid. The scattered measurements 9 include both the flow velocity measurements $v = \{v_{i1}, v_{i2}, \dots, v_{iN_C}\}$ of the tracer particles 4 and the corresponding positions $x = \{x_{i1}, x_{i2}, \dots, x_{iN_C}\}$ thereof.

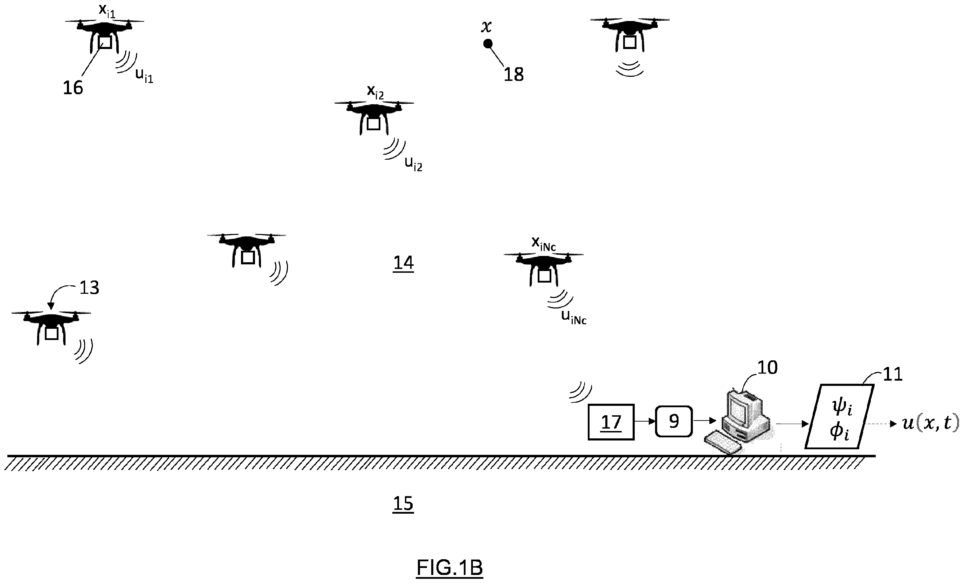

In another embodiment, depicted in Figure 1B, a plurality $N_c$ of drones 13 are scattered in the atmosphere 14, wherein the fluid to be measured is the air in the atmosphere 14. The drones 13 are equipped with a sensor unit 16 (including a sensor or a set of sensors) configured to measure, for each time instant $t_i$ of a plurality $N_t$ of time instances, a velocity or a thermodynamic property of the air at the corresponding drone position $x = \{x_{i1}, x_{i2}, \dots, x_{iN_C}\}$ in the atmosphere 14 above ground 15. The sensor unit 16 may collect temperature, humidity, air pressure or wind speed data, among other data. The sensor unit 16 may include, for instance, a temperature sensor or a barometric pressure sensor.

The drones are synchronized to obtain the measurements of the field $u = \{u_{i1}, u_{i2}, \dots, u_{iN_C}\}$ at the same time instants $t_i$, the field $u$ being for instance the pressure $P$ or temperature $T$ of the air. The drones 13 are further equipped with a position module configured to obtain the position $x$ (e.g. altitude, latitude, and longitude) of the drone. The position module may include, for instance, an altitude sensor or any other sensor capable of obtaining the drone altitude, and a GNSS (Global Navigation Satellite System) module to obtain the latitude and longitude.

The sensor units 16 of the drones 13 send, via a wireless module communication, the scattered measurements 9 to a processing unit 10. The position of each drone $x = \{x_{i1}, x_{i2}, \dots, x_{iN_C}\}$ is transmitted together with the corresponding sensor measurement $u = \{u_{i1}, u_{i2}, \dots, u_{iN_C}\}$. Using the received scattered measurements 9, the processing unit 10 computes the temporal $\psi_i$ and spatial $\phi_i$ modes of the proper orthogonal decomposition of the corresponding field $u$ (e.g. temperature when the drone sensor is a temperature sensor) of the air in the atmosphere 14.

The wireless module communication may be any hardware capable of wirelessly transmitting data (e.g. a 4G/5G cellular communication module, a WiFi module, a ZigBee module, a LoRa module). A receiver unit 17 receives the scattered measurements 9 sent by the drones 13 and transmits the data to the processing unit 10. The receiver unit may be a standalone module, or a hardware integrated into the processing unit 10. The processing unit 10 may be, for instance, a laptop or a computer arranged in the vicinity, when short-range wireless communication is employed, or a remote server, when the data are transmitted through long distances (e.g. the Internet).

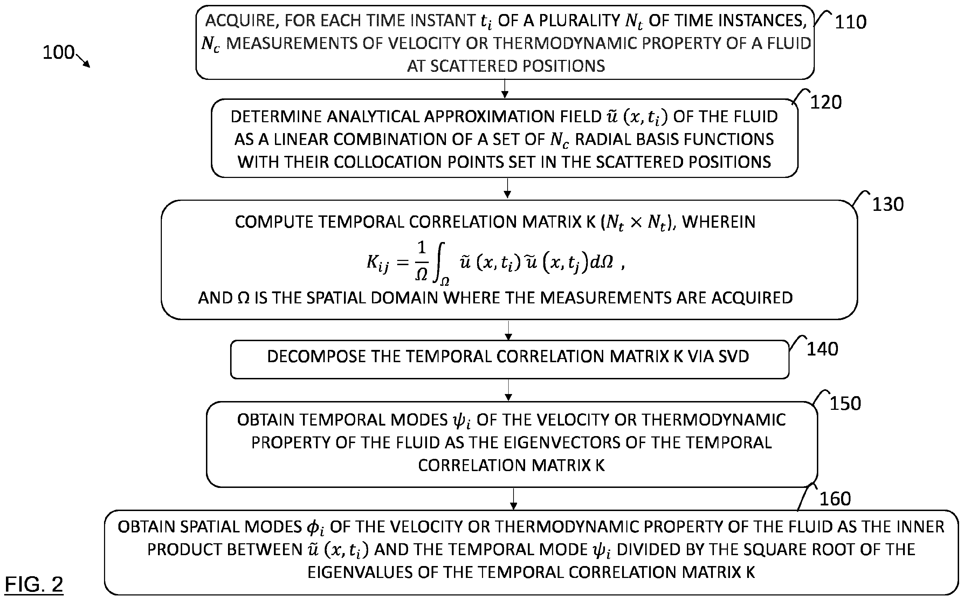

**Figure 2** illustrates the steps of a method 100 of obtaining spatial and temporal patterns of the velocity or a thermodynamic property of a fluid from scattered measurements according to an embodiment.

The method comprises a first step of acquiring 110, for each time instant $t_i$ of a plurality $N_t$ of time instances, a plurality $N_c$ of scattered measurements 9 of a velocity or a thermodynamic property of a fluid at scattered positions $x\{x_{i1}, x_{i2}, ..., x_{iNc}\}$. The scattered measurements 9 may be acquired by a single sensor (e.g. particle image velocimetry system 8 in Figure 1A) or a plurality of sensors (e.g. sensor units 16 installed onboard the drones 13 in Figure 1B).

In the embodiment depicted in Figure 1A, the light source 5 illuminates the tracer particles 4 that trace the flow. In case of 2D measurement the illuminated region 12 is a sheet and, for 3D measurement, a volume. The light scattered by the tracer particles 4 is recorded by the camera 2 (a single camera for planar applications, a double camera for stereoscopic applications, or two or more cameras for volumetric applications). The camera equipment records, for each time instant, at least two consecutive frames with a known time separation. This step allows to compute the displacement of the tracer particles 5 and, consequently, their corresponding velocities.

The method 100 also comprises the steps performed by the processing unit 10 to compute the spatial and temporal patterns 11 from the received scattered measurements 9. These steps include determining 120, using the scattered measurements 9, an analytical approximation field $\tilde{u}(x, t_i)$ of the velocity or the thermodynamic property of the fluid for each position $x$ and time instant $t_i$ as a linear combination of a set of $N_c$ radial basis functions, wherein the collocation points of the radial basis functions are set in the scattered positions $\{x_{i1}, x_{i2}, ..., x_{iNc}\}$ at the corresponding time instant $t_i$.

The input of the processing unit 10 is the scattered measurements 9 available for the different time instants , the scattered measurements 9 including values of the field $u$ (flow velocity or thermodynamic quantities) of the fluid 1 and the positions $\{x_{i1}, x_{i2}, ..., x_{iNc}\}$ where the measurements were taken for each time instant $t_i$. An analytical representation of the field $u$ for each time instant $t_i$, $\tilde{u}(x, t_i)$, is obtained as a linear combination of a set of radial basis functions $\gamma_i$, as previously explained in Equation 2. The collocation points $x^*$ are set in the position of the scattered data. A mesh is thus not predefined, since the data are captured in different positions at different time instants.

The velocity field approximation for the embodiment of Figure 1A is referred as $\tilde{u}(x, t_i)$, where the vector $x$ contains the coordinates on which the data are evaluated at the $i^{th}$ time instant $t_i$ among the total $N_t$ time instances.

The method 100 further comprises computing 130 a temporal correlation matrix K. The temporal correlation matrix K, with dimension $N_t \times N_t$, is computed as the inner product, denoted as $\langle .,. \rangle_s$, between all the samples (snapshots) of the analytical approximation field $\{\tilde{u}_1, \tilde{u}_2, ..., \tilde{u}_{Nt}\}$ using the analytical formulation from Equation 2, over the different time instants $t_i = \{t_1, t_2, ..., t_{Nt}\}$:

$$K = [\langle \tilde{u}_1, \tilde{u}_1 \rangle_s \cdots \langle \tilde{u}_1, \tilde{u}_{Nt} \rangle_s \vdots \ddots \vdots \langle \tilde{u}_{Nt}, \tilde{u}_1 \rangle_s \cdots \langle \tilde{u}_{Nt}, \tilde{u}_{Nt} \rangle_s ]. \quad (3)$$

The generic element $K_{ij}$ of the temporal correlation matrix K can be computed enforcing the definition of inner product in a continuous domain:

$$K_{ij} = \frac{1}{\|\Omega\|} \int_\Omega \tilde{u}(x, t_i) \tilde{u}(x, t_j) d\Omega \qquad (4)$$

In the given context, $\Omega$ represents the spatial domain over which the data is collected. The proposed way to solve this integral is the Gauss-Legendre quadrature, but any other option can be employed.

In the next step, the temporal correlation matrix K is decomposed 140 using singular value decomposition (SVD) in order to obtain 150 the temporal modes $\psi_i$ of the proper orthogonal decomposition (POD) of the velocity or thermodynamic property of the fluid. The decomposition of K via SVD leads to:

$$K = \Psi \Sigma^2 \Psi^T, \qquad (5)$$

The matrix $\Psi$ contains the analytical temporal modes $\psi_i$ and $\Sigma$ the corresponding singular values. The temporal modes $\psi_i$ are the eigenvectors of the temporal correlation matrix K.

Finally, the spatial modes $\phi_i$ of the POD of the velocity or thermodynamic property of the fluid are obtained 160. The $i^{th}$ spatial mode $\phi_i$ is computed as the inner product between the analytical approximation field $\tilde{u}(x, t)$ and the $i^{th}$ temporal mode $\psi_i$, divided by $\sigma_i$, wherein $\sigma_i^2$ are the eigenvalues of the temporal correlation matrix K, according to the following equation:

$$\sigma_i \phi_i(x_i) = \langle \tilde{u}(x,t), \psi_i(t) \rangle = \int_t \tilde{u}(x,t)\psi_i(t)dt \qquad (6)$$

In order to visualize the spatial modes they need to be projected on Eulerian grid, but still the process remains mesh-free because the projection on the grid is employed only for visualization purposes.

The method may further comprise obtaining the value of the field $u$ (velocity or thermodynamic property of the fluid) at a given position $x$ and time instant $t_i$ using the temporal $\psi_i$ and spatial $\phi_i$ modes of the POD, and the eigenvalues $\sigma_i^2$ of the temporal correlation matrix K, according to Equation 1. In that case the invention refers to a method of obtaining the velocity or thermodynamic property of a fluid from scattered measurements 9. In the example shown in Figure 1B the value of the field $u$ (e.g. temperature) at a position $x$ 18 and a time instant $t_i$ of interest of the plurality of $N_t$ time instances can be obtained by the processing unit 10 using the temporal $\psi_i$ and spatial $\phi_i$ modes. The measurement of a specific physical property, such as pressure or temperature, at a specific location $x$ by means of measurements of the same physical property at another locations $\{x_{i1}, x_{i2}, ..., x_{iNC}\}$ involves an indirect measurement.

As the present invention is aimed at carrying out modal analysis of distributed data in motion, it can be advantageously applied to meteorology data, such as measurements acquired by buoys scattered at sea, by drones 13 scattered in the atmosphere or by any other moving sensing device.

Another aspect of the present invention refers to a non-transitory computer-readable medium for obtaining spatial and temporal patterns of the velocity or a thermodynamic property of a fluid from scattered measurements, comprising executable programming instructions stored thereon that, when executed by a processing unit 10, cause the processing unit 10 to receive a plurality $N_c$ of scattered measurements 9 of a velocity or a thermodynamic property of a fluid 1 at scattered positions $x = \{x_{i1}, x_{i2}, ..., x_{iNC}\}$ for each time instant $t_i$ of a plurality $N_t$ of time instances, and obtain from said scattered measurements 9 the spatial $\phi_i$ and temporal $\psi_i$ modes as defined in steps 120, 130, 140, 150 and 160 of method 100.

The non-transitory computer-readable medium may further comprise executable programming instructions stored thereon that, when executed by the processing unit 10, cause the processing unit 10 to further obtain the velocity or thermodynamic property of the fluid 1 at a position $x$ and time instant $t_i$ using the temporal $\psi_i$ and spatial $\phi_i$ modes of the proper orthogonal decomposition.

The primary advantage of this new approach, compared to standard POD, lies in its notably higher accuracy. By avoiding the modulation effects associated with confining data to a fixed Eulerian mesh, this methodology allows for identifying patterns on much smaller scales that were previously filtered out by the conventional approach.

Moreover, the availability of mesh-free modes is a noteworthy feature. Once patterns have been extracted, these modes can be interpolated onto the most suitable mesh, whether it be coarser for a focus on larger scales or finer in cases where smaller scales or specific coordinates (e.g., radial) are of interest. This flexibility in mesh selection enhances the adaptability of the approach to diverse analytical needs.

Lastly, the extendibility of this approach is a key aspect. The same workflow can be applied to reap the benefits for other variants of POD, broadening its applicability and allowing for the extraction of meaningful patterns in various contexts.

## Claims

1. A system for obtaining spatial and temporal patterns of the velocity or a thermodynamic property of a fluid from scattered measurements, the system comprising:

    at least one sensor configured to acquire, for each time instant $t_i$ of a plurality $N_t$ of time instances, a plurality $N_c$ of scattered measurements (9) of a velocity or a thermodynamic property of a fluid (1) at scattered positions $x = \{x_{i1}, x_{i2}, ..., x_{iNC}\}$; and
    a processing unit (10) configured to:

determine, using the scattered measurements (9), an analytical approximation field $\tilde{u}(x, t_i)$ of the velocity or the thermodynamic property of the fluid (1) for each position $x$ and time instant $t_i$ as a linear combination of a set of $N_c$ radial basis functions, wherein the collocation points of the radial basis functions are set in the scattered positions $\{x_{i1}, x_{i2}, ..., x_{iN_C}\}$ at the corresponding time instant $t_i$;
compute a temporal correlation matrix $K$, with dimension $N_t \times N_t$, wherein each element $K_{ij}$ of the temporal correlation matrix K is computed as:

$$K_{ij} = \frac{1}{\|\Omega\|} \int_{\Omega} \tilde{u}(x, t_i)\, \tilde{u}(x, t_j)\, d\Omega ,$$

wherein $\Omega$ is the spatial domain where the scattered measurements (9) are acquired;
decompose the temporal correlation matrix $K$ via singular value decomposition, SVD;
obtain the temporal modes $\psi_i$ of the proper orthogonal decomposition of the velocity or thermodynamic property of the fluid (1), wherein the temporal modes $\psi_i$ are the eigenvectors of the temporal correlation matrix K; and
obtain the spatial modes $\phi_i$ of the proper orthogonal decomposition of the velocity or thermodynamic property of the fluid (1), wherein the $i^{th}$ spatial mode $\phi_i$ is computed as the inner product between the field $\tilde{u}(x, t_i)$ and the $i^{th}$ temporal mode $\psi_i$ divided by $\sigma_i$, wherein $\sigma_i^2$ are the eigenvalues of the temporal correlation matrix K.

2. The system of claim 1, wherein the processing unit (10) is further configured to obtain the velocity or thermodynamic property of the fluid (1) at a position $x$ and time instant $t_i$ using the temporal $\psi_i$ and spatial $\phi_i$ modes of the proper orthogonal decomposition.

3. The system of any of claims 1 to 2, wherein the at least one sensor comprises a particle image velocimetry system (8) including a light source (5) and at least one camera (6).

4. The system of any of claims 1 to 2, wherein the at least one sensor comprises a plurality of sensor units (16) mounted on drones (13) scattered in the atmosphere (14).

5. The system of any of claims 1 to 2, wherein the at least one sensor comprises a plurality of sensor units mounted on buoys scattered at sea.

6. A method of obtaining spatial and temporal patterns of the velocity or a thermodynamic property of a fluid from scattered measurements, the method (100) comprising:

acquiring (110), for each time instant $t_i$ of a plurality $N_t$ of time instances, a plurality $N_c$ of scattered measurements (9) of a velocity or a thermodynamic property of a fluid (1) at scattered positions $x = \{x_{i1}, x_{i2}, ..., x_{iN_C}\}$;
determining (120), using the scattered measurements (9), an analytical approximation field $\tilde{u}(x, t_i)$ of the velocity or the thermodynamic property of the fluid (1) for each position $x$ and time instant $t_i$ as a linear combination of a set of $N_c$ radial basis functions, wherein the collocation points of the radial basis functions are set in the scattered positions $\{x_{i1}, x_{i2}, ..., x_{iN_C}\}$ at the corresponding time instant $t_i$;
computing (130) a temporal correlation matrix $K$, with dimension $N_t \times N_t$, wherein each element $K_{ij}$ of the temporal correlation matrix K is computed as:

$$K_{ij} = \frac{1}{\|\Omega\|} \int_{\Omega} \tilde{u}(x, t_i)\, \tilde{u}(x, t_j)\, d\Omega ,$$

wherein $\Omega$ is the spatial domain where the scattered measurements (9) are acquired;
decomposing (140) the temporal correlation matrix $K$ via singular value decomposition, SVD;
obtaining (150) the temporal modes $\psi_i$ of the proper orthogonal decomposition of the velocity or thermodynamic property of the fluid (1), wherein the temporal modes $\psi_i$ are the eigenvectors of the temporal correlation matrix $K$; and
obtaining (160) the spatial modes $\phi_i$ of the proper orthogonal decomposition of the velocity or thermodynamic property of the fluid (1), wherein the $i^{th}$ spatial mode $\phi_i$ is computed as the inner product between the field $\tilde{u}(x, t_i)$

and the $i^{th}$ temporal mode $\psi_i$ divided by $\sigma_i$, wherein $\sigma_i^2$ are the eigenvalues of the temporal correlation matrix $K$.

7. The method of claim 6, further comprising obtaining the velocity or thermodynamic property of the fluid (1) at a position x and time instant $t_i$ using the temporal $\psi_i$ and spatial $\phi_i$ modes of the proper orthogonal decomposition.

8. The method of any of claims 6 to 7, wherein the scattered measurements (9) are acquired by a particle image velocimetry system (8).

9. The method of any of claims 6 to 7, wherein the scattered measurements (9) are acquired by a plurality of sensor units (16) mounted on drones (13) scattered in the atmosphere (12).

10. The method of any of claims 6 to 7, wherein the scattered measurements (9) are acquired by a plurality of sensor units mounted on buoys scattered at sea.

11. A non-transitory computer-readable medium for obtaining spatial and temporal patterns of the velocity or a thermodynamic property of a fluid from scattered measurements, comprising executable programming instructions stored thereon that, when executed by a processing unit (10), cause the processing unit (10) to:

   receive a plurality $N_c$ of scattered measurements (9) of a velocity or a thermodynamic property of a fluid (1) at scattered positions $x = \{x_{i1}, x_{i2}, \ldots, x_{iN_C}\}$ for each time instant $t_i$ of a plurality $N_t$ of time instances;
   determine an analytical approximation field $\tilde{u}(x, t_i)$ of the velocity or the thermodynamic property of the fluid (1) for each position $x$ and time instant $t_i$ as a linear combination of a set of $N_c$ radial basis functions, wherein the collocation points of the radial basis functions are set in the scattered positions $\{x_{i1}, x_{i2}, \ldots, x_{iN_C}\}$ at the corresponding time instant $t_i$;
   compute a temporal correlation matrix $K$, with dimension $N_t \times N_t$, wherein each element $K_{ij}$ of the temporal correlation matrix $K$ is computed as:

$$K_{ij} = \frac{1}{\|\Omega\|} \int_{\Omega} \tilde{u}(x, t_i)\, \tilde{u}(x, t_j)\, d\Omega ,$$

   wherein $\Omega$ is the spatial domain where the scattered measurements (9) are acquired;
   decompose the temporal correlation matrix K via singular value decomposition, SVD;
   obtain the temporal modes $\psi_i$ of the proper orthogonal decomposition of the velocity or thermodynamic property of the fluid (1), wherein the temporal modes $\psi_i$ are the eigenvectors of the temporal correlation matrix $K$; and
   obtain the spatial modes $\phi_i$ of the proper orthogonal decomposition of the velocity or thermodynamic property of the fluid (1), wherein the $i^{th}$ spatial mode $\phi_i$ is computed as the inner product between the field $\tilde{u}(x, t_i)$ and the $i^{th}$ temporal mode $\psi_i$ divided by $\sigma_i$, wherein $\sigma_i^2$ are the eigenvalues of the temporal correlation matrix $K$.

12. The non-transitory computer-readable medium of claim 11, further comprising executable programming instructions stored thereon that, when executed by the processing unit (10), cause the processing unit (10) to further obtain the velocity or thermodynamic property of the fluid (1) at a position $x$ and time instant $t_i$ using the temporal $\psi_i$ and spatial $\phi_i$ modes of the proper orthogonal decomposition.

$$x\{x_{i1}, x_{i2}, \ldots, x_{iN_C}\}$$

$$v\{v_{i1}, v_{i2}, \ldots, v_{iN_C}\}$$

SCATTERED MEASUREMENTS

PROCESSING UNIT 10

SPATIAL AND TEMPORAL PATTERNS

FIG.1A

FIG.1B

EP 4 614 358 A1

EP 4 614 358 A1

$100\searrow$

ACQUIRE, FOR EACH TIME INSTANT $t_i$ OF A PLURALITY $N_t$ OF TIME INSTANCES, $N_c$ MEASUREMENTS OF VELOCITY OR THERMODYNAMIC PROPERTY OF A FLUID AT SCATTERED POSITIONS — 110

DETERMINE ANALYTICAL APPROXIMATION FIELD $\tilde{u}\,(x, t_i)$ OF THE FLUID AS A LINEAR COMBINATION OF A SET OF $N_c$ RADIAL BASIS FUNCTIONS WITH THEIR COLLOCATION POINTS SET IN THE SCATTERED POSITIONS — 120

COMPUTE TEMPORAL CORRELATION MATRIX K $(N_t \times N_t)$, WHEREIN — 130

$$K_{ij} = \frac{1}{\Omega} \int_{\Omega} \tilde{u}\,(x, t_i)\,\tilde{u}\,(x, t_j)d\Omega \ ,$$

AND $\Omega$ IS THE SPATIAL DOMAIN WHERE THE MEASUREMENTS ARE ACQUIRED

DECOMPOSE THE TEMPORAL CORRELATION MATRIX K VIA SVD — 140

OBTAIN TEMPORAL MODES $\psi_i$ OF THE VELOCITY OR THERMODYNAMIC PROPERTY OF THE FLUID AS THE EIGENVECTORS OF THE TEMPORAL CORRELATION MATRIX K — 150

OBTAIN SPATIAL MODES $\phi_i$ OF THE VELOCITY OR THERMODYNAMIC PROPERTY OF THE FLUID AS THE INNER PRODUCT BETWEEN $\tilde{u}\,(x, t_i)$ AND THE TEMPORAL MODE $\psi_i$ DIVIDED BY THE SQUARE ROOT OF THE EIGENVALUES OF THE TEMPORAL CORRELATION MATRIX K — 160

FIG. 2

Europäisches Patentamt

European Patent Office

Office européen des brevets

**EUROPEAN SEARCH REPORT**

**Application Number**

EP 24 38 2241

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Buljak Vladimir: "Proper Orthogonal Decomposition and Radial Basis Functions Algorithm for Diagnostic Procedure Based on Inverse Analysis", , 30 January 2010 (2010-01-30), XP093200825, Retrieved from the Internet: URL:https://www.researchgate.net/publication/277066729_Proper_orthogonal_decomposition_and_radial_basis_functions_algorithm_for_diagnostic_procedure_based_on_inverse_analysis [retrieved on 2024-09-02] * sections 3 and 4 * | 1-12 | INV. G06F17/16 G06F30/00 |
| A | MOAAD KHAMLICH ET AL: "A physics-based reduced order model for urban air pollution prediction", ARXIV.ORG, CORNELL UNIVERSITY LIBRARY, 201 OLIN LIBRARY CORNELL UNIVERSITY ITHACA, NY 14853, 8 May 2023 (2023-05-08), XP091505183, Retrieved from the Internet: URL:https://www.researchgate.net/publication/370604397_A_physics-based_reduced_order_model_for_urban_air_pollution_prediction [retrieved on 2024-09-02] * section 2 * | 1-12 | TECHNICAL FIELDS SEARCHED (IPC) G06F |

-/--

The present search report has been drawn up for all claims

| Place of search | Date of completion of the search | Examiner |
|---|---|---|
| Berlin | 2 September 2024 | Virnik, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

**EUROPEAN SEARCH REPORT**

Application Number

EP 24 38 2241

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SPEROTTO PIETRO ET AL: "A meshless method to compute pressure fields from image velocimetry", MEASUREMENT SCIENCE AND TECHNOLOGY, IOP, BRISTOL, GB, 9 June 2022 (2022-06-09), XP020458975, ISSN: 0957-0233, DOI: 10.1088/1361-6501/AC70A9 Retrieved from the Internet: URL:https://arxiv.org/abs/2112.12752 [retrieved on 2022-06-09] * section 2 * | 1-12 | |
| A | SATYAPRAKASH KARRI ET AL: "Robust wall gradient estimation using radial basis functions and proper orthogonal decomposition (POD) for particle image velocimetry (PIV) measured fields; Robust wall gradient estimation using radial basis functions and POD for PIV measured fields", MEASUREMENT SCIENCE AND TECHNOLOGY, IOP, BRISTOL, GB, 10 February 2009 (2009-02-10), page 45401, XP020152652, ISSN: 0957-0233, DOI: 10.1088/0957-0233/20/4/045401 Retrieved from the Internet: URL:http://dx.doi.org/10.1088/0957-0233/20/4/045401 [retrieved on 2024-09-02] * section 2.3 * | 1-12 | **TECHNICAL FIELDS SEARCHED (IPC)** |

-/--

The present search report has been drawn up for all claims

| Place of search | Date of completion of the search | Examiner |
|---|---|---|
| Berlin | 2 September 2024 | Virnik, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

page 2 of 3

Europäisches
Patentamt

European
Patent Office

Office européen
des brevets

**EUROPEAN SEARCH REPORT**

Application Number

EP 24 38 2241

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ARÁNYI PATRÍCIA ET AL: "Analysis of different POD methods for PIV-measurements in complex unsteady flows", INTERNATIONAL JOURNAL OF HEAT AND FLUID FLOW, 29 July 2013 (2013-07-29), pages 204-211, XP093200867, GB ISSN: 0142-727X, DOI: 10.1016/j.ijheatfluidflow.2013.07.001 Retrieved from the Internet: URL:https://www.sciencedirect.com/science/article/pii/S0142727X13001434/pdfft?md5=a73caf13c78bf9c18e5cfff41c3c8c0a&pid=1-s2.0-S0142727X13001434-main.pdf [retrieved on 2024-09-02] * sections 3 and 4 * | 1-12 | |

TECHNICAL FIELDS
SEARCHED (IPC)

The present search report has been drawn up for all claims

| Place of search | Date of completion of the search | Examiner |
|---|---|---|
| Berlin | 2 September 2024 | Virnik, Elena |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2011076346 A1
- WO 2014191461 A1

### Non-patent literature cited in the description

- **JIMÉNEZ, J**. Coherent structures in wall-bounded turbulence. *Journal of Fluid Mechanics*, 2018, vol. 842, 1
- **J.L. LUMLEY**. Stochastic Tools in Turbulence.. *DOVER PUBN INC*, 1970, ISBN 0486462706
- **J.L. LUMLEY** ; **A.POJE.** Low-dimensional models for flows with density fluctuations. *Physics of Fluids*, July 1997, vol. 9 (7), 2023-2031
- **LUMLEY, J.L.** The structure of inhomogeneous turbulent flows.. *Atmospheric turbulence and radio wave propagation*, 1967, 166-178
- **RAFFEL, M** ; **WILLERT, C. E** ; **SCARANO, F.** ; **KÄHLER, C. J.** ; **WERELEY, S. T.** ; **KOMPENHANS, J**. Particle image velocimetry: a practical guide.. Springer, 2018
- **SCARANO, F.** Theory of non-isotropic spatial resolution in PIV.. *Experiments in Fluids*, 2003, vol. 35, 268-277
- **KÄHLER, C.J.** ; **SCHARNOWSKI, S.** ; **CIERPKA, C.** On the resolution limit of digital particle image velocimetry.. *Experiments in fluids*, 2012, vol. 52, 1629-1639
- **ABRAM, C** ; **FOND, B.** ; **BEYRAU, F.** Temperature measurement techniques for gas and liquid flows using thermographic phosphor tracer particles.. *Progress in energy and combustion science*, 2018, vol. 64, 93-156
- **ABE, S** ; **OKAMOTO, K.** ; **MADARAME, H.** The development of PIV-PSP hybrid system using pressure sensitive particles. *Measurement Science and Technology*, 2004, vol. 15 (6), 1153
- **AHMERKAMP, S** ; **JALALUDDIN, F.M.** ; **CUI, Y** ; **BRUMLEY, D.R** ; **PACHERRES, C.O** ; **BERG, J.S.** ; **STOCKER, R** ; **KUYPERS, M.M.** ; **KOREN, K** ; **BEHRENDT, L.** Simultaneous visualization of flow fields and oxygen concentrations to unravel transport and metabolic processes in biological systems.. *Cell Reports Methods*, 2022, vol. 2, 5
- **SOMEYA, S.** Particle-based temperature measurement coupled with velocity measurement.. *Measurement Science and Technology*, 2021, vol. 32 (4), 042001
- **B.R. NOACK** ; **P.PAPAS** ; **P. MONKEWITZ.** The need for a pressure-term representation in empirical Galerkin models of incompressible shear flows.. *Journal of Fluid Mechanics.*, 2005, vol. 523, 339-365
- **P. SAINI** ; **C.M. ARNDT** ; **A.M. STEINBERG**. Development and evaluation of gappy-POD as a data reconstruction technique for noisy PIV measurements in gas turbine combustors.. *Experiments in Fluids*, July 2016, vol. 57, 7
- **J.A. BOURGEOIS** ; **B.R. NOACK** ; **R.J. MARTI-NUZZI.** Generalized phase average with applications to sensor-based flow estimation of the wall-mounted square cylinder wake. *Journal of Fluid Mechanics*, November 2013, vol. 736, 316-350
- **J. KRIEGSEIS** ; **T. DEHLER** ; **M. GNIRß** ; **C. TROPEA.** Common-base proper orthogonal decomposition as a means of quantitative data comparison.. *Measurement Science and Technology*, July 2010, vol. 21 (8), 085403
- **Z. YAO** ; **Z. WANG** ; **J. YI-LIN FORREST** ; **Q. WANG** ; **J. LV**. Empirical mode decomposition-adaptive least squares method for dynamic calibration of pressure sensors.. *Measurement Science and Technology*, February 2017, vol. 28 (4), 045010
- **Z. SHEN** ; **Z. SHI** ; **G. SHEN** ; **D. ZHEN** ; **F. GU** ; **A. BALL**. Informative singular value decomposition and its application in fault detection of planetary gearbox.. *Measurement Science and Technology*, May 2022, vol. 33 (8), 085010
- **A. CASTILLO** ; **A. ROMAN MESSINA.** Data-driven sensor placement for state reconstruction via POD analysis.. *IET Generation, Transmission & Distribution*, January 2020, vol. 14 (4), 656-664